# EUROPEAN PATENT SPECIFICATION

(11) **EP 1 264 284 B1**
(45) Date of publication and mention of the grant of the patent: **12.05.2004**
(21) Application number: 01911878.5
(22) Date of filing: 13.03.2001
(51) Int. Cl.: G07C 9/00

(54) **SECURE SERVICES**
GESICHERTE DIENSTE
SERVICES SECURISES

(30) Priority: 14.03.2000 EP 00302045
(43) Date of publication of application: 11.12.2002
(73) Proprietor: BRITISH TELECOMMUNICATIONS public limited company, London EC1A 7AJ (GB)
(72) Inventor: ATTWATER, David, John, Ipswich, Suffolk IP2 8AP (GB); FISHER, John, Stephen, Ipswich IP1 4LN (GB); MARSH, Paul, Francis, Russell, Warren Heath,Ipswich IP3 8UT (GB)
(74) Representative: Wallin, Nicholas James
(86) International application number: PCT/GB2001/001082
(87) International publication number: WO 2001/069543

(56) References cited:
- WO-A-91/09383
- WO-A-95/18441
- WO-A-99/42992
- US-A- 4 277 644
- US-A- 5 548 647
- US-A- 5 832 063
- SMITH S L: "AUTHENTICATING USERS BY WORD ASSOCIATION" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 6, no. 6, 1 December 1987 (1987-12-01), pages 464-470, XP000050578 ISSN: 0167-4048

## Description

The present invention relates to secure services suitable for the use, for example, over a communications network. In particular, it concerns security codes for users of such services.

Increasingly, face-to-face transactions between customers and service providers are being replaced by transactions carried out remotely over a communications network. This provides ease of access for the customer, and reduced costs for the service operator. For example, in the case of banking services, there has been to a rapid rise in Internet banking and in a telephone banking operations. Internet banking in particular, offers the possibility of large cost savings, since customer transactions can be fully automated. Currently, telephone banking is implemented using human operators and a call centre. It would be desirable to automate telephone banking using interactive voice response (IVR) technology. One potential barrier to doing so, is the need for secure identification of customers.

The present Applicant's co-pending application, EP 00302044.3 also entitled "Secure Services" describes and claims a user name format suitable for use as an identification code for services using a speech recognition interface. In addition to, or as an alternative to the use of a security mechanism based on a user name, it is sometimes desirable to provide the user with another security code comprising, for example, three or four digits. Such codes are commonly referred to as PINs (personal identification numbers).

WO 91/09383 discloses a method of automatic verification of personal identity comprising the automatic generation of cue-response pairs and allocation of such cue-response pairs to authorized people for later verification of identity. Phrases or sentences might be used as cue and response.

According to a first aspect of the present invention, there is provided a method of assigning a security code comprising:
selecting a token from each of plurality of sets of tokens and concatenating the said tokens to form a sequence for use as the security code,
storing a record of the sequence and of the identity of the party associated with the said security code, and
issuing the said sequence to the party,
characterised in that the tokens are natural language words, and in that words for different positions in the sequence are selected from different respective pre-defined sets of words, the different pre-defined sets comprising words of different respective parts of speech, whereby the sequence constitutes a phrase conforming to the grammar of the said natural language.

The method of the present invention provides the user with a security code that is far more memorable than conventional numerical PINs. At the same time, the code is particularly well adapted for use with a speech recognition interface. The sets of words from which the security code is selected may be pre-programmed into the recognition grammar of a speech recognition system enabling recognition with a high degree of accuracy. Typically, the sets of words may comprise a list of nouns, a list of adjectives and a list of verbs and a word from each set may be randomly concatenated to provide the security code. If the size of the sets is such that the number of possible combinations is greater than 9999, then this provides security at least as good as a four digit numerical PIN. Then concatenating the words from the different sets in an appropriate order results in phrases that are grammatically correct, and so can be interpreted by the user, but that are in general semantically unusual. For example, using the sequence adjective, verb, noun example phases may include "pink surfing elephant" or "frozen sprinting potatoes".

Preferably the method includes associating a different number with each word in each set, and issuing to the party both the sequence of natural language words and the corresponding sequence of number.

This preferred feature of the invention is particularly valuable in the context of an security code that is to be used over different channels. For example, the code might be intended for use both via a speech recognition interface and also via the keypad of an automatic teller machine (ATM), or via a web interface. Then, while the phrase would be spoken when using the speech recognition interface, the corresponding numerical sequence maybe used instead for the other channels.

Preferably each word in a respective set has a different initial letter.

Where this constraint is applied, then rather than using a number sequence as an as an alternative to the phrase, the sequence of initials may be used. For example, over a speech interface the user may speak the phrase "pink surfing elephant". Over a textual interface, the user instead types the initials "pse". The use of the initials, rather than a number sequence, removes from the user the need to remember a numerical sequence.

According to a second aspect of the present invention, there is provided a method of operating a secure service comprising:
a) receiving from a user a security code;
b) verifying the security code; and
c) executing a transaction with the user;
characterised in that the security code comprises a sequence of natural language words and in that words for different positions in the sequence are selected from different respective sets of words, the different sets comprising words of different respective parts of speech, whereby the sequence constitutes a phrase conforming to the grammar of the said natural language.

Preferably the step of receiving from the user the security code includes receiving a spoken security code at a speech recognition device pre-programmed with a recognition grammar comprising at least the said sets of natural language words. In this case preferably the step of verifying the security code includes communicating to the user the words recognised by the speech recognition device, and only when the user confirms the security code then communicating the security code to a verification application arranged to compare the security code with a record of security codes and user identities.

The inventors have found that the accuracy and security of the verification process are significantly enhanced by requiring the user to confirm the output of the speech recognition device before this is passed for checking against previously stored records.

Systems embodying the present invention will now be described in a further detail, by way of example only, with reference to the accompanying drawings, in which:

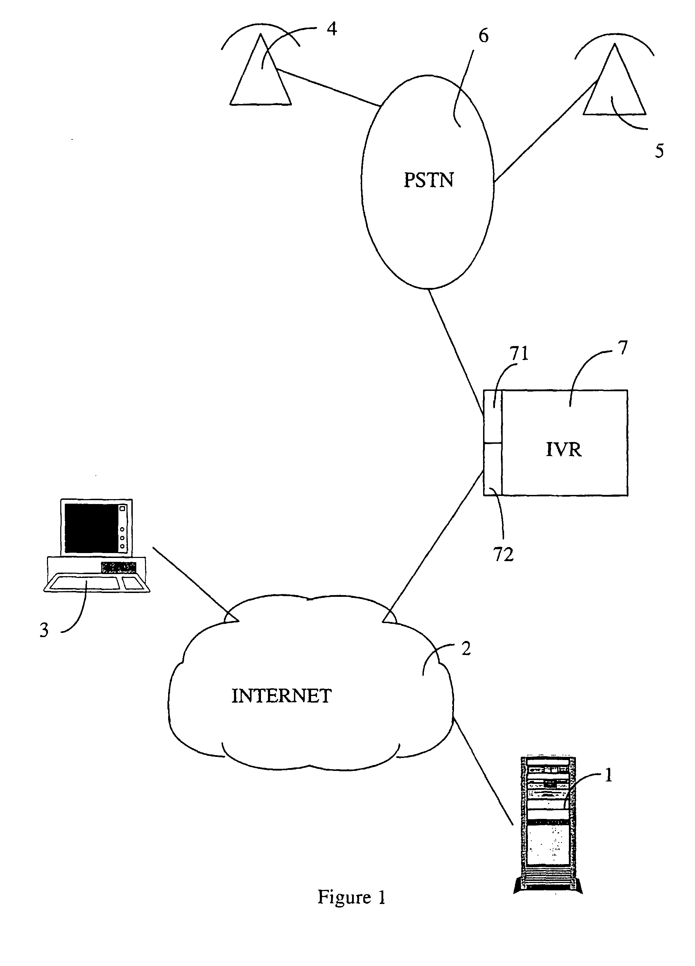

Figure 1 is a diagram showing schematically a communications system suitable for use with the present invention;
Figure 2 shows a speech recognition system for use in methods embodying the invention
Figure 3 is an overview of an application architecture;
Figure 4 is a diagram showing an example of an address format;
Figure 5 shows a first implementation of interfaces between different channels and an application;
Figure 6 shows an alternative implementation of interfaces between different channels and the application.

An applications server 1 is connected to the public Internet 2. In this example, the applications server runs a banking application. Both voice and text interfaces are provided to the banking application. A customer using the text interface, connects with the application server from a customer terminal 3, which, in this example, is a personal computer having an internet connection. At other times, the customer uses a voice interface. In this case, the customer terminal is a telephone 4, 5 connected to a telephony network 6. Customers accessing the device interface are connected via the telephony networks 6 to an IVR platform 7. The platform 7 includes both a number of telephony ports 71 and also a TCP /I P (Transport control Protocol /Internet Protocol) data interface 72. The data interface 72 is connected to the application server 1. This connection may be via the public Internet 2, as shown in the figure. A secure sockets layer (SSL) connection is used to provide cryptographic security for the data. Alternatively, to provide enhanced security, a private intranet may be used, or a direct one-to-one link in the case of an IVR platform co-located with the application server.

Suitable IVR platforms are available commercially from Periphonics ™. Speech recognition software for use on such a platform is available commercially from Nuance ™. It will be understood that these products are identified by way of example only, and a number of alternative systems may be substituted including, for example, systems running on Windows NT ™ workstations.

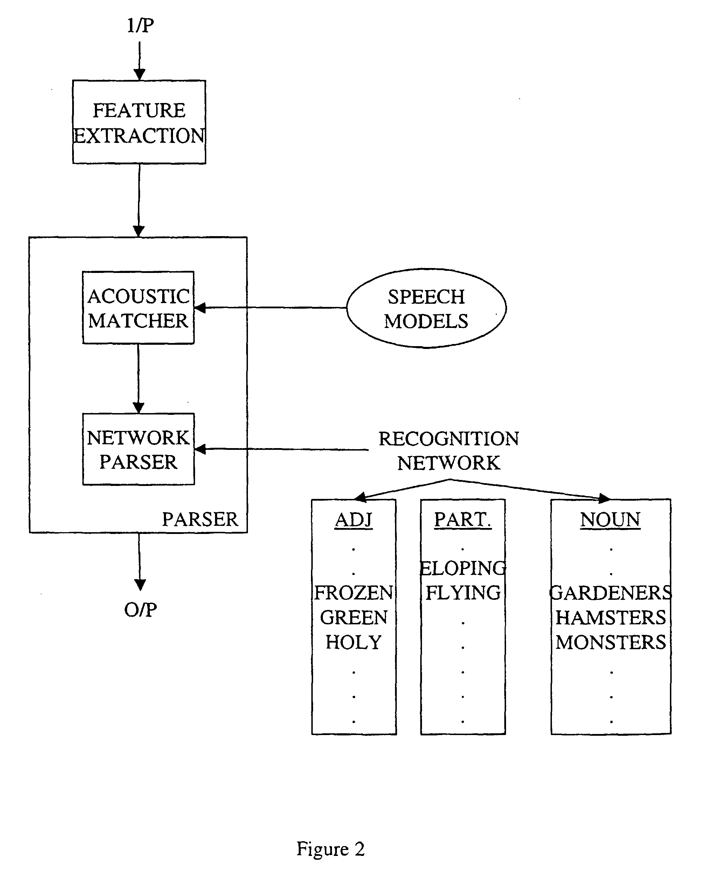

Figure 2 shows schematically the architecture of the voice recognition system running on the IVR platform 7. The input is a digitised audio signal representing the user's speech. This is processed first by a feature extraction front end 101 before passing to a parser comprising an acoustic matcher 102 and a network parser 103 . The acoustic matcher uses speech models 104 to identify elements of the speech signal. The network parser then uses a recognition network 105 embodying a preprogrammed recognition grammar to identify the words spoken by the user. In systems embodying the invention, the recognition grammar includes defined sets of natural language words, numbers and a separator character, as further described below.

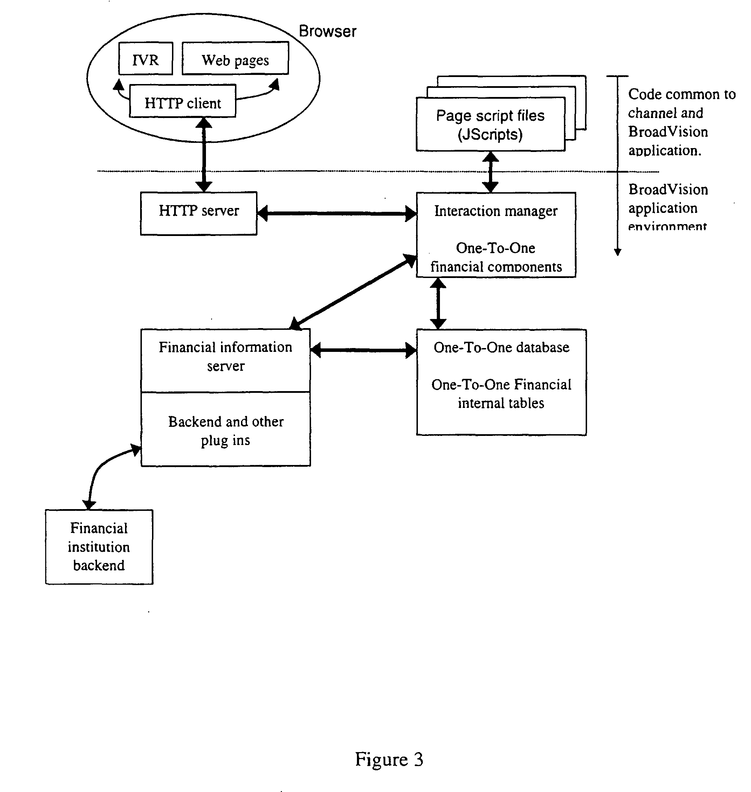

In the present example, the applications running on the server 1 are implemented using a system known as BroadVision that is designed to give users access to account data via multiple channels including the world wide web. At the application level, a common interface is used for the different channels. Figure 3 shows an overview of a BroadVision banking application. Both the IVR platform and the customer terminal 3 interact with the application via respective HTTP clients. These are termed generically "browsers", although the IVR platform client is not a conventional graphical/textual web browser. The IVR client does not require HTML information, but only minimal textual information. The communications between the HTTP server and the IVR client are a subset of the data passed between a conventional web browser and the server.

In use, customers wishing to access account data may, for example, dial a telephone number associated with the service from one of the customer terminals 4,5. In an initial dialogue with the IVR platform, the customer identifies themselves using an address in the Vbank (virtual bank) format described below. As a further security measure, the customer is then required to input a further security code. This code has been previously assigned to the customer and comprises a string of, e.g. three words. Table 1 below shows an example of the data sets used to assign the further security code.

**TABLE 1**

| **ADJ.** | **PART.** | **NOUN** |
|---|---|---|
| Blue 0 | Batting 0 | Anteaters 0 |
| | | |
| Dumb 1 | Crouching 1 | Bats 1 |
| | | |
| Frozen 2 | Ducking 2 | Chopsticks 2 |
| | | |
| Green 3 | Eloping 3 | Elephants 3 |
| | | |
| Holy 4 | Flying 4 | Gardeners 4 |
| | | |
| Lethal 5 | Hopping 5 | Hamsters 5 |
| | | |
| Pink 6 | Laughing 6 | Monsters 6 |
| | | |
| Rare 7 | Peeping 7 | Potatoes 7 |
| | | |
| Silver 8 | Sprinting 8 | Rhinos 8 |
| | | |
| Tangled 9 | Tapdancing 9 | Skates 9 |

The table contains, in the three columns, three sets of words comprising respectively adjectives, participles and nouns. A number is associated with each word. In assigning the security code to the user, a three digit random number is generated, for example 071, and the corresponding words from the enumerated sets are used in the sequence adjective-participle noun to form the code "blue peeping bats". This code is issued to the user, and also stored with the identity of the user in the records of the banking application. The numerical sequence may also be issued to the user, for use over alternative interfaces, for example when accessing the application from a browser on the personal computer. Alternatively, the initials of the words forming the code, e.g "bpb" may instead be used.

When the security code "blue peeping bats" is spoken by the user to the IVR, the speech data is processed and the resulting data is replayed to the user for confirmation. If confirmed, the user name and the security code are passed to the banking application, where they are verified against data stored in a database. The initial dialogue may be as follows:
■ "Welcome to X Bank, please say your user name."
   "Paul Marsh thirty-one at Ipswich"
■ "Please say your X Bank password phrase."
   "blue peeping bats"
■ "Did you say blue peeping bats"
   "Yes" *Verify on password*.
■ "Good afternoon Mr Marsh, which transaction would you like?"

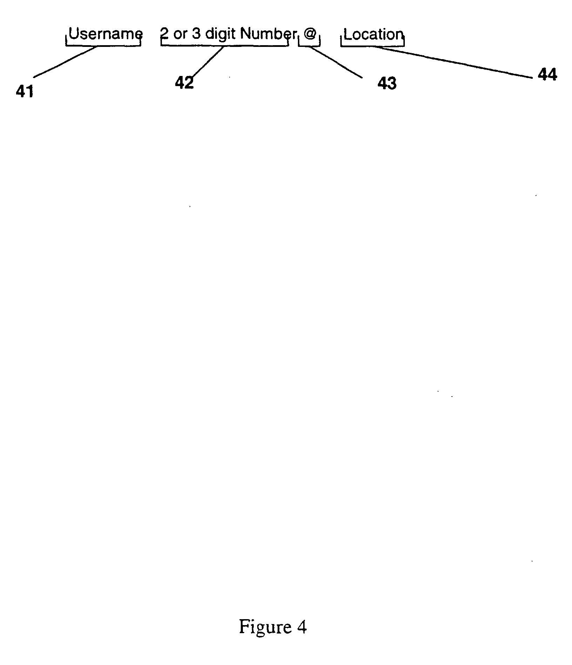

An example of the Vbank user name format is shown in Figure 4. This format is described in further detail and claimed in our above-cited co-pending patent application. The first element 41 is a name selected from a list of e.g. 1000 possible personal names. A two or three digit number 42 is associated with the first element. The use of the number allows multiple users to have the same name as the first element and adds to the phonetic distinctiveness of the whole address. The next element is a separator element 43. In this case, this is the @ sign, pronounced "at". This is familiar to users from its use in email addresses, and has the advantages that its pronunciation is well known, although if need be, instructions on pronunciation may be communicated to the user, for example on the web page where the Vbank address is first issued. The final element 44 relates to the location of the user and is a geographical name, e.g. a town name, chosen from a list of 500 such names. The geographical names are selected for their phonetic dissimilarity and popularity. For example, London is not included as it would be selected by too many users. Instead a number of London boroughs, e.g. Hammersmith, Croydon are included. This geographical element servers in use to aid phonetic separation of the user names. Other fields may be substituted where appropriate. For example, a set of postcodes, either complete postcodes or the first part of postcodes, e.g. IP3 and NG14, might be used.

To enhance the distinctiveness of user names for users having, e.g., a surname not included in the predefined set, the initial and two following letters of the surname may be represented using the NATO phonetic alphabet. The two digit number associated with one of the names is used to resolve ambiguity in the relationship between spoken and textual forms of the user names in the case homophones (shared pronunciation, common spelling) and homographs (common spelling, plural valid pronunciations).

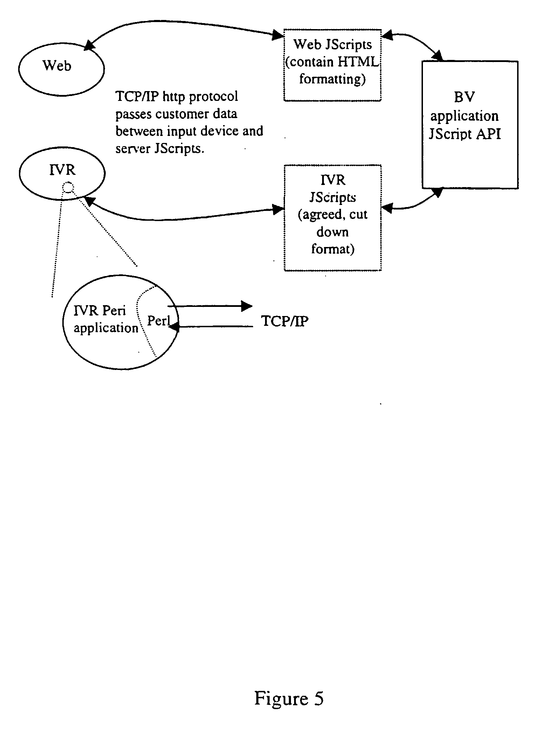

As described in outline above, the BroadVision application in this example uses a number of access channels, including both web and IVR channels, via a common API (application programming interface). The implementation of the interfaces is shown in further detail in Figure 5. The BroadVision API is implemented using Perl scripts and an HTTP interface for both IVR and web channels. Server CGI scripts return HTML text and are replaced, in the case of the IVR interface, by custom scripts that return only the data required for the IVR interface, without the HTML wrapper text. Most of the functionality implemented in the Java scripts for the web channel is necessary for the IVR channel except the HTML formatting which is passed to the web browser. Hence the IVR channel uses derived scripts but the messages that it passes back to the IVR contain the minimum information necessary. The messages each channel passes to the Java scripts are the same and are of standard URL query variable type.

| | | |
|---|---|---|
| Channel | Messages to BV application JScripts | Messages from BV application Jscripts |
| Web client | URL queries formulated by client side HTML. Each query asks for a banking function and passes the appropriate arguments. | A new HTML page containing results of previous query and facility for new queries. HTML is generated by a Java script which can also handle the new queries. |
| IVR client | URL queries formulated by client side Perl scripts. | Java script sends query result information only. The Perl scripts know the query formats and URLs of other Java scripts if they require more functions. |

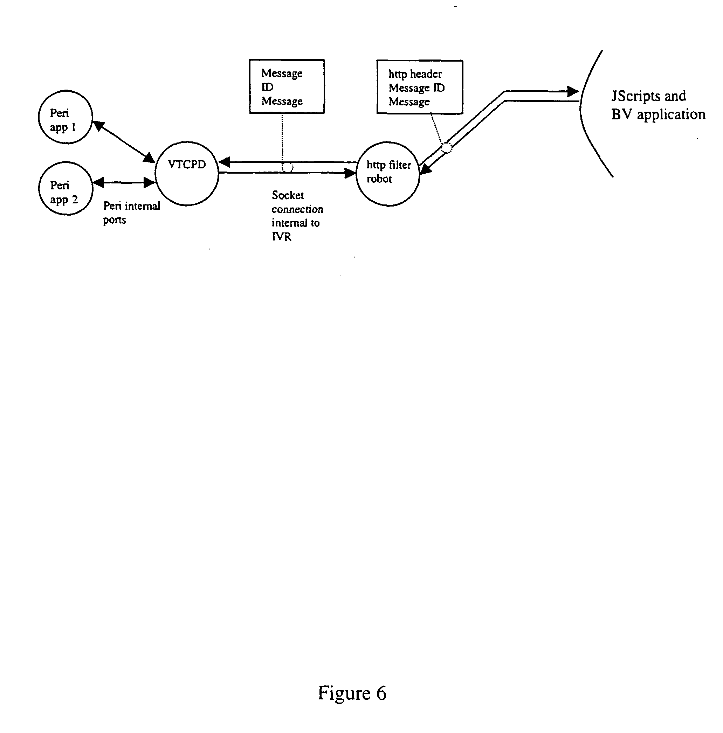

Input parameters are passed from the Peri code to the Perl scripts via a Peri system block. However there is no direct mechanism for the Perl script to pass return values back so they are stored in a file which the Peri code parses. Figure 6 shows an alternative to the user of parameter passing between Peri code (that is the native applications running on the IVR platform) and Perl scripts on the server. The Peri code uses the VTCPD process to communicate with the external host.. VTCPD is a Periphonics process that integrates with the rest of its environment and allows TCP/IP socket communication. However it does not directly support http protocols and requires extra header information to direct messages to the different applications running on the IVR.

## Claims

1. A method of assigning a security code comprising
selecting a token from each of a plurality of sets of tokens and concatenating the said tokens to form a sequence for use as the security code,
storing a record of the sequence and of the identity of the party associated with the said security code, and
issuing the said sequence to the party,
**characterised in that** the tokens are natural language words and **in that** words for different positions in the sequence are selected from different respective sets of words, the different sets comprising words of different respective parts of speech, whereby the sequence constitutes a phrase conforming to the grammar of the said natural language.

2. A method according to claim 1, including associating a different number with each word in each set, and issuing to the party both a sequence of natural language words and the corresponding sequence of numbers.

3. A method according to claim 1 or 2, in which each word in a respective set has a different initial letter.

4. A method of operating a secure service comprising
a) receiving from a user a security code,
b) verifying the security code, and
c) executing a transaction with the user
**characterised in that** the security code comprises a sequence of natural language words and **in that** words for different positions in the sequence are selected from different respective sets of words, the different sets comprising words of different respective parts of speech, whereby the sequence constitutes a phrase conforming to the grammar of the said natural language.

5. A method according to claim 4, in which the step of receiving from the user the security code includes receiving a spoken security code at a speech recognition device pre-programmed with a recognition grammar comprising at least the said sets of natural language words.

6. A method according to claim 4 or 5, in which the secure service includes both a text interface and a speech interface, the method including receiving some security codes and executing some transactions via the text interface, and receiving other security codes and executing other transactions via the speech interface.

7. A method according to claim 5 or 6, in which the step of verifying the security code includes communicating to the user the words recognised by the speech recognition device and only when the user confirms the security code then communicating the security code to a verification application arranged to compare the security code with a record of security codes and user identities.

## Patentansprüche

1. Verfahren zum Zuweisen eines Sicherheitscodes, das aufweist Wählen eines Tokens aus jeder einer Vielzahl von Mengen aus Token und Verketten der Token, um eine Sequenz zur Verwendung als Sicherheitscode zu bilden,
Speichern eines Datensatzes für die Sequenz und die Identität des dem Sicherheitscode zugehörigen Beteiligten, und
Ausgeben der Sequenz an den Beteiligten,
**dadurch gekennzeichnet, dass** die Token natürlichsprachliche Wörter sind, und dass Wörter für verschiedene Positionen in der Sequenz aus verschiedenen jeweiligen Mengen von Wörtern gewählt werden, wobei die verschiedenen Mengen Wörter aus verschiedenen jeweiligen Teilen der Sprache aufweisen, wobei die Sequenz eine der Grammatik der natürlichen Sprache entsprechende Phrase bildet.

2. Verfahren gemäß Anspruch 1, das ein Verknüpfen einer unterschiedlichen Zahl mit jedem Wort in jeder Menge und ein Ausgeben sowohl einer Sequenz natürlichsprachlicher Wörter als auch der korrespondierenden Zahlenreihe an den Beteiligten umfasst.

3. Verfahren gemäß Anspruch 1 oder 2, wobei jedes Wort in einer jeweiligen Menge einen anderen Anfangsbuchstaben aufweist.

4. Verfahren des Betriebs eines gesicherten Dienstes, das aufweist
a) Empfangen eines Sicherheitscodes von einem Benutzer,
b) Verifizieren des Sicherheitscodes, und
c) Ausführen einer Transaktion mit dem Benutzer,
**dadurch gekennzeichnet, dass** der Sicherheitscode eine Sequenz natürlichsprachlicher Wörter aufweist, und dass Wörter für verschiedene Positionen in der Sequenz aus verschiedenen jeweiligen Mengen von Wörtern gewählt werden, wobei die verschiedenen Mengen Wörter aus verschiedenen jeweiligen Teilen der Sprache aufweisen, wobei die Sequenz eine der Grammatik der natürlichen Sprache entsprechende Phrase bildet.

5. Verfahren gemäß Anspruch 4, wobei der Schritt des Empfangens des Sicherheitscodes von dem Benutzer ein Empfangen eines gesprochenen Sicherheitscodes mittels einer Vorrichtung zur Spracherkennung umfasst, die mit einer Erkennungsgrammatik vorprogrammiert ist, welche zumindest die Mengen der natürlichsprachlichen Wörter aufweist.

6. Verfahren gemäß Anspruch 4 oder 5, wobei der gesicherte Dienst sowohl eine Text-Schnittstelle als auch eine Sprach-Schnittstelle umfasst, wobei das Verfahren ein Empfangen einiger Sicherheitscodes und ein Ausführen einiger Transaktionen über die Text-Schnittstelle und ein Empfangen anderer Sicherheitscodes und ein Ausführen anderer Transaktionen über die Sprach-Schnittstelle umfasst.

7. Verfahren gemäß Anspruch 5 oder 6, wobei der Schritt des Verifizierens des Sicherheitscodes ein Übertragen der von der Spracherkennungsvorrichtung erkannten Wörter an den Benutzer und, nur wenn der Benutzer den Sicherheitscode bestätigt, ein Übertragen des Sicherheitscodes an eine Verifizierungs-Anwendung umfasst, die ausgebildet ist, den Sicherheitscode mit einem Datensatz von Sicherheitscodes und Benutzer-Identitäten zu vergleichen.

## Revendications

1. Procédé d'affectation d'un code de sécurité comprenant
la sélection d'un jeton parmi chaque ensemble d'une pluralité d'ensembles de jetons et la concaténation desdits jetons pour former une séquence en vue d'une utilisation comme code de sécurité,
la mémorisation d'un enregistrement de la séquence et de l'identité du correspondant associé audit code de sécurité, et
la délivrance de ladite séquence au correspondant,
**caractérisé en ce que** les jetons sont des mots en langue naturelle et **en ce que** des mots pour des positions différentes de la séquence sont sélectionnés parmi des ensembles respectifs différents de mots, les ensembles différents comprenant des mots de parties respectives différentes de parole, grâce à quoi la séquence constitue une locution se conformant à la grammaire de ladite langue naturelle.

2. Procédé selon la revendication 1, comprenant l'association d'un numéro différent de chaque mot de chaque ensemble, et la délivrance au correspondant, à la fois d'une séquence de mots en langue naturelle et de la séquence correspondante de numéros.

3. Procédé selon la revendication 1 ou 2, dans lequel chaque mot d'un ensemble respectif comporte une lettre initiale différente.

4. Procédé de mise en oeuvre d'un service sécurisé comprenant
a) la réception depuis un utilisateur, d'un code de sécurité,
b) la vérification du code de sécurité, et
c) l'exécution d'une transaction avec l'utilisateur
**caractérisé en ce que** le code de sécurité comprend une séquence de mots en langue naturelle et **en ce que** des mots pour des positions différentes de la séquence sont sélectionnés parmi des ensembles respectifs différents de mots, les ensembles différents comprenant des mots de parties respectives différentes de parole, grâce à quoi la séquence constitue une locution se conformant à la grammaire de ladite langue naturelle.

5. Procédé selon la revendication 4, dans lequel l'étape de réception depuis l'utilisateur, du code de sécurité, comprend la réception d'un code de sécurité parlé au niveau d'un dispositif de reconnaissance de la parole préprogrammé avec une grammaire de reconnaissance comprenant au moins lesdits ensembles de mots en langue naturelle.

6. Procédé selon la revendication 4 ou 5, dans lequel le service sécurisé comprend à la fois une interface de texte et une interface vocale, le procédé comprenant la réception de certains codes de sécurité et l'exécution de certaines transactions par l'intermédiaire de l'interface de texte, et la réception d'autres codes de sécurité et l'exécution d'autres transactions par l'intermédiaire de l'interface vocale.

7. Procédé selon la revendication 5 ou 6, dans lequel l'étape de vérification du code de sécurité comprend le fait de communiquer à l'utilisateur les mots reconnus par le dispositif de reconnaissance de la parole et uniquement lorsque l'utilisateur confirme le code de sécurité, le fait de communiquer alors le code de sécurité à une application de vérification agencée pour comparer le code de sécurité à un enregistrement des codes de sécurité et des identités des utilisateurs.
